# EUROPEAN PATENT APPLICATION

(11) **EP 2 696 324 A1**
(43) Date of publication of application: **12.02.2014**
(21) Application number: 12863818.6
(22) Date of filing: 28.12.2012
(51) Int. Cl.: G06Q 50/20

(54) **METHOD FOR PROVIDING CORRECTION AND TEACHING SERVICES OVER NETWORK AND WEB SERVER USED IN SAID METHOD**

(30) Priority: 29.12.2011 KR 20110145580
(71) Applicant: Intellectual Discovery Co., Ltd., Seoul 135-745 (KR)
(72) Inventor: LEE, Sang-Gyu, Seoul 137-070 (KR); LEE, Suk-Joo, Yongin-si Gyeonggi-do 448-160 (KR)
(74) Representative: Ter Meer Steinmeister & Partner
(86) International application number: PCT/KR2012/011682
(87) International publication number: WO 2013/100681

(57) **Abstract**

Disclosed are a method for providing a correction and teaching services over a network and a web server used in the method. The method of the present invention is implemented by the steps of: enabling a web server to receive information to be corrected including image information created by a student from a student terminal, storing the information to be corrected, transmitting the information to be corrected to a teacher terminal, receiving corrected information from the teacher terminal, and mapping the corrected information and the information to be corrected. According to the present invention, the cost of time required for correcting and teaching can be reduced, and the teacher can provide the student with both corrections on the student's answer sheet and with feedback in the teacher's voice.

## Description

### [Technical Field]

Exemplary embodiments of the present invention relate to a method for providing correction and teaching services over network and web server used in said method. More particularly, exemplary embodiments of the present invention relate to a method for providing not only correction and teaching services but also voice advises of a teacher over network, which is capable of reducing time and fees thereof and web server used in said method.

### [Background Art]

A conventional teaching method, according to which a teacher makes correction to an exam paper written by a student so that the student confirm the problem of the exam paper to improve the problem, has been widely used.

However, according to the conventional teaching method, a teacher should collect the exam papers of students, correct the exam papers and return the exam papers to the students. Therefore, much time is required for collecting and returning the exam papers.

Further, according to the conventional teaching method, a limited correction can be provided to a student due to a time limitation since the correction is performed only through a letter or a character.

### [Disclosure]

### [Technical Problem]

Exemplary embodiments of the present invention provide method for providing not only correction and teaching services but also voice advises of a teacher over network, which is capable of reducing time and fees thereof and web server used in said method.

### [Technical Solution]

A method for providing correction and teaching services over network, which can solve the above problem, includes a step of enabling a web server to receive information to be corrected, which includes image information created by a student from a student terminal, a step of enabling the web server to store the information to be corrected, a step of enabling the web server to transmit the information to be corrected to a teacher terminal, a step of enabling the web server to receive corrected information from the teacher terminal, a step of mapping the corrected information and the information to be corrected.

Preferably, the method further includes a step of enabling the web server to store studying information generated by the corrected information and the information to be corrected, which are mapped with each other.

Further, the method includes a step of enabling the web server to transmit the studying information to the student terminal.

On the other hand, the image information is generated by an electric pen, when the student writes down something on a scratch paper with the electric pen, the scratch paper including codes which are formed at each position and represent the position, the electric pen reading a write-starting point and measuring and storing relative coordinate on the scratch paper when the student writes down something on the scratch paper to obtain and store write-trajectory information based on position information of the write-starting point and the relative coordinate.

Further, the corrected information is generated by an electric pen, when the teacher writes down correction on a scratch paper with the electric pen, the image information included in the information to be corrected being printed out on the scratch paper, the scratch paper including codes which are formed at each position represent the position, the electric pen reading a write-starting point, and measuring and storing relative coordinate on the scratch paper when the teacher writes down something on the scratch paper to obtain and store write-trajectory information based on position information of the write-starting point and the relative coordinate.

A web server according to the present invention includes a receiving section configured to receive information to be corrected, which includes image information created by a student from a student terminal, a storing section configured to store the information to be corrected, a transmitting section configured to transmit the information to be corrected to a teach terminal, and a mapping section configured to map corrected information with the information to be corrected when the receiving section receives the corrected information from the teacher terminal.

Preferably, the storing section further stores studying information generated by the corrected information and the information to be corrected mapped with each other.

Further, the transmitting section further transmits the studying information to the student terminal.

On the other hand, the image information is generated by an electric pen, when the student writes down something on a scratch paper with the electric pen, the scratch paper including codes which are formed at each position and represent the position, the electric pen reading a write-starting point, and measuring and storing relative coordinate on the scratch paper when the student writes down something on the scratch paper to obtain and store write-trajectory information based on position information of the write-starting point and the relative coordinate.

Further, the corrected information is generated by an electric pen, when the teacher writes down correction on a scratch paper with the electric pen, the image information included in the information to be corrected being printed out on the scratch paper, the scratch paper including codes which are formed at each position represent the position, the electric pen reading a write-starting point, and measuring and storing relative coordinate on the scratch paper when the teacher writes down something on the scratch paper to obtain and store write-trajectory information based on position information of the write-starting point and the relative coordinate.

### [Advantageous Effects]

According to the present invention, a time and a fee required for correction and teaching services may be reduced.

Furthermore, according to the present invention, not only correction and teaching services regarding exam paper but also voice advises of a teacher may be provided.

### [Description of Drawings]

FIG. 1 is a schematic view showing a system for providing correction and teaching services over network according to a present invention.
FIG. 2 is a view showing an electric diary according to a present invention.
FIG. 3 is a diagram showing an operation of an electric pen included in the electric diary used in the present invention.
FIG. 4 is a block diagram showing a structure of the electric pen used in the present invention.
FIG. 5 is a block diagram showing a body display section of the electric diary used in the present invention.
FIG. 6 is a block diagram showing a web server of a system for providing correction and teaching services over network according to a present invention.
FIG. 7 is a flow chart showing a method for providing correction and teaching services over network according to a present invention.

### [Mode for Invention]

Hereinafter, exemplary embodiments of the present invention will be described with reference to the accompanying drawings. In the drawings, the same reference numbers are used for the same elements. And, a function and an element of prior art which are unnecessarily point cloudy will be omitted.

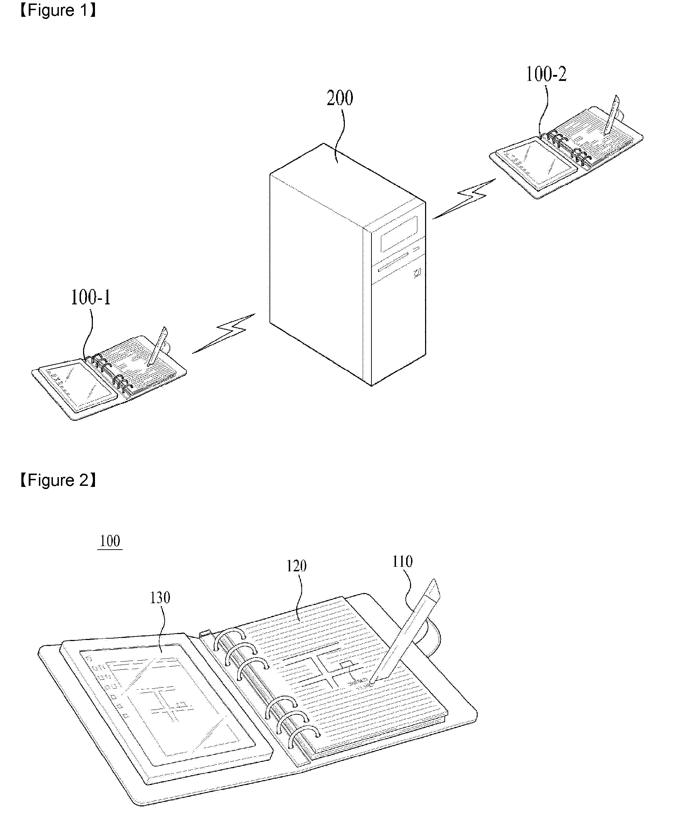

FIG. 1 is a schematic view showing a system for providing correction and teaching services over network according to a present invention.

Referring to FIG. 1, a system for providing correction and teaching services over network according to a present invention includes a student terminal 100-1, a web server 200 and a teacher terminal 100-2.

In embodying the present invention, the student terminal 100-1 and the teacher terminal 100-2 may preferably be an electric diary 100 shown in FIG. 2.

FIG. 2 is a view showing an electric diary 100 that may be used as the student terminal 100-1 and the teacher terminal 100-2.

Referring to FIG. 2, the electric diary 100 according to the present invention includes an electric pen 110, a scratch paper 120, and a body display section 130.

The scratch paper 120 is ostensibly seems like a general scratch paper of a general diary. However, the scratch paper 120 includes invisible codes which are formed at each position and represent the position.

The electric pen 110 ostensibly seems like a general pen. When a user writes something down onto a paper, the electric pen 110 put out ink. Therefore, the electric pen 110 can be used for writing visible something down on the scratch paper 120. Additionally, the electric pen 110 can read the codes on the scratch paper 120 to get the position information.

In detail, when a user writes down something on the scratch paper 120 by using the electric pen 110, the electric pen 110 reads out position information of write-starting point, and measure and store relative coordinate on the scratch paper 120 when the user writes down something on the scratch paper 120 to obtain and store write-trajectory information based on position information of the write-starting point and the relative coordinate.

The body display section 130 receives the write-trajectory information from the electric pen 110 through a wireless communication, and displays write-trajectory.

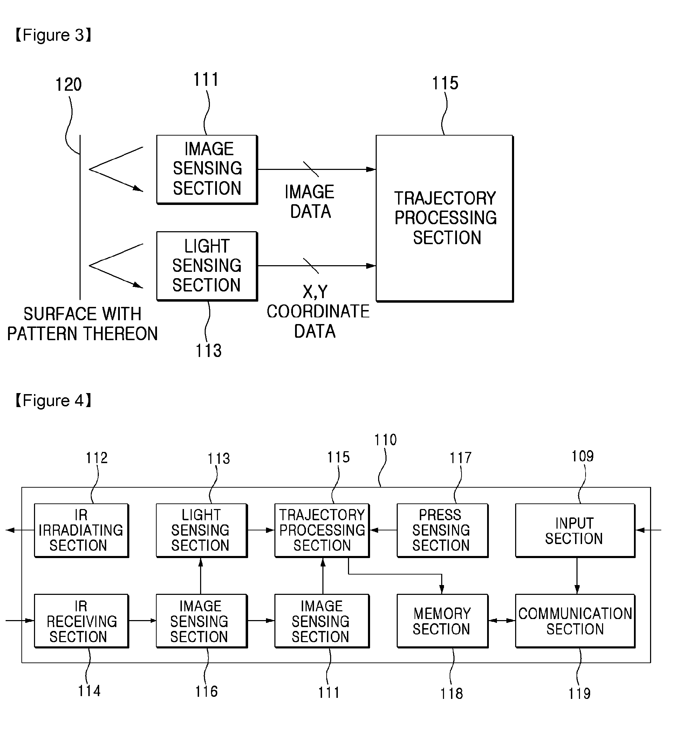

FIG. 3 is a diagram showing an operation of an electric pen 110 included in the electric diary 100 used as the student terminal 100-1 and the teacher terminal 100-2 of the present invention. As shown in FIG. 3, the electric pen 110 according to the present invention includes an image sensing section 111 receiving infrared light reflected by the scratch paper 120 corresponding to a to get absolute coordinate of the electric pen 110, and a light sensing section 113 receiving infrared light reflected by the scratch paper 120 to get relative trajectory of the electric pen 110 when the electric pen 110 is moved by a user.

On the other hand, a trajectory processing section 115 receives the absolute coordinate of the electric pen 110 from the image sensing section 111, and receives the relative trajectory to get writing trajectory of the electric pen 110.

FIG. 4 is a block diagram showing a structure of the electric pen 110 included in the electric diary 100 used as the student terminal 100-1 and the teacher terminal 100-2 of the present invention. Referring to FIG. 4, the electric pen 110 includes an IR irradiating section 112, an IR receiving section114, a light sensing section 113, an optical section116, an image sensing section111, a press sensing section 117, a trajectory processing section 115, a memory section118, a communication section119, and an input section 109.

The IR irradiating section 112 irradiates infrared light onto the scratch paper 120, and the infrared light reflected by the scratch paper 120 is received by the IR receiving section 114.

The infrared light received by the IR receiving section 114 is divided into two rays, and the image sensing section 111 and the light sensing section 113 receives the two rays respectively. For example, the image sensing section 111 may be embodied by a C-MOS image sensor, and the light sensing section 113 may be embodied by an optical mouse sensor.

Generally, the optical mouse sensor is designed to get relative coordinate with high definition, and outputs relative coordinate or relative phase as a result of sensing output.

The infrared light received by the IR receiving section 114 is divided by the optical sensor 116, so that a portion of the infrared light is received by the light sensing section 113, and a remaining portion of the infrared light is received by the image sensing section 111.

The light sensing section 113 obtains a relative trajectory of the electric pen 110, based on the received infrared light through the optical section 116, and the image sensing section 111 obtains an absolute coordinate of the electric pen 110, based on the received infrared light through the optical section 116.

On the other hand, it is preferable for the image sensing section 111 to get images with a constant time interval. Preferably, the image sensing section 111 senses two or three images per a second.

As described above, the absolute coordinate and the relative trajectory obtained by the image sensing section 111 and the light sensing section 113, respectively are transmitted to the trajectory processing section 115, and the trajectory processing section 115 generates the write-trajectory of the electric pen 110 by using the absolute coordinate and the relative trajectory. In the present invention, it may be preferable for the trajectory processing section 115 to record the absolute trajectory and the time at which the relative coordinate is obtained.

The memory section 118 stores the write-trajectory information generated by the trajectory processing section.

The press sensing section 117 formed at a grip portion of the electric pen 110 may detect pen pressure of a user to transmit the pen pressure to the trajectory processing section 115, and the trajectory processing section 115 determine thickness of the write-trajectory of the electric pen 110 based on the pen pressure.

Furthermore, the electric pen 110 may have a microphone, so that the audio file of a voice inputted by the microphone may be stored at the memory section 118 as well as the write-trajectory information.

When writing is done, the communication section 119 in the electric pen 110 transmits the write-trajectory information and the audio file to the body display section 130 according to a date transmit direction of a user, which is performed by the input section 109.

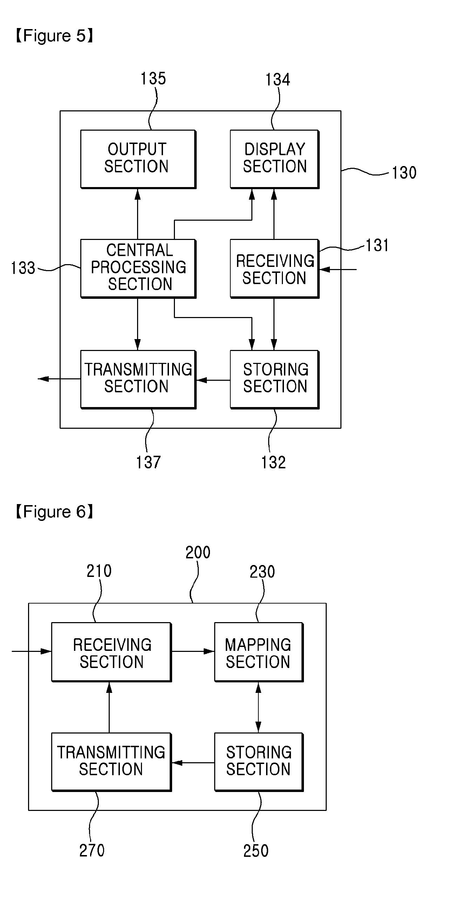

FIG. 5 is a block diagram showing a body display section of the electric diary 100 used as the student terminal 100-1 and the teacher terminal 100-2 of the present invention. Referring to FIG. 5, the body display section 130 according to the present invention includes a receiving section 131, a storing section 132, a central processing section 133, a display section 134, an output section 135 and a transmitting section 137.

The body display section 130 receives the write-trajectory information and the audio file stored in the memory section 118 of the electric pen 110 from the communication section 119 of the electric pen 110 through a Bluetooth communication, and the received write-trajectory information and the received audio file are stored in the storing section 132.

The write-trajectory information stored in the storing section 132 is provided to a user through a display section 134 such as a liquid crystal display, and the audio file may be outputted through an output section 135 such as a speaker when the write-trajectory information is displayed through the display section 134 according to a choice of a user. In this case, a user may more easily recall memories since peripheral sounds that are recorded at the same time of wiring are reproduced.

The central processing section 133 controls series of actions in the body display section 130, and may control the transmitting section 137 to transmit the write-trajectory information and the audio file stored in the storing section 132 to a web server 200.

For example, the student terminal 100-1 in FIG. 1 transmits information to be corrected, which includes image information such as an answer sheet created by a student to the web server 200. The web server 200 receives and stores the information to be corrected, and then the web server 200 transmits the information to be corrected to the teacher terminal 100-2.

Then, a teacher, who receives the information to be corrected through the teacher terminal 100-2, prints out the image information such as the answer sheet created by the student through a printer connected to the student terminal 100-1. In this case, the paper of the printer is the scratch paper with codes described above.

The teacher makes a correction to the answer sheet on the scratch paper on which the image information is printed out by using the electric pen 110 having the structure described above. As a result, corrected information is generated and stored by the teacher terminal 100-2.

The teacher terminal 100-2 transmits the corrected information to the web server 200, and the web server 200 maps the corrected information received from the teacher terminal 100-2 with the information to be corrected, which is already stored in the web server 200 to generate studying information corresponding to image information of corrected answer sheet. Then, the studying information stored in the web server 200 is transmitted to the student terminal 100-1.

FIG. 6 is a block diagram showing a web server of a system for providing correction and teaching services over network according to a present invention.

Referring to FIG. 6, the web server 200 according to the present invention includes a receiving section 210, a mapping section 230, a storing section 250 and a transmitting section 270. The receiving section 210 of the web server 200 receives the information to be corrected, which includes the image information created by a student, from the student terminal 100-1, and the corrected information created by a teacher from the teacher terminal 100-2.

The storing section 250 stores the information to be corrected transmitted by from the student terminal 100-1, and the corrected information transmitted by the teacher terminal 100-2. The mapping section 230 maps the information to be corrected with the corrected information. In detail, the mapping section 230 overlaps the information to be corrected, which includes the image information such as the answer sheet with the corrected information including the answer sheet corrected by a teacher to generate the studying information. The studying information is stored in the storing section 250.

The transmitting section 270 of the web server 200 transmits the information to be corrected, which is transmitted from the student terminal 100-1, to the teacher terminal 100-2, and transmits the studying information generated by the corrected information which is transmitted from the teacher terminal 100-2 to the student terminal 100-1.

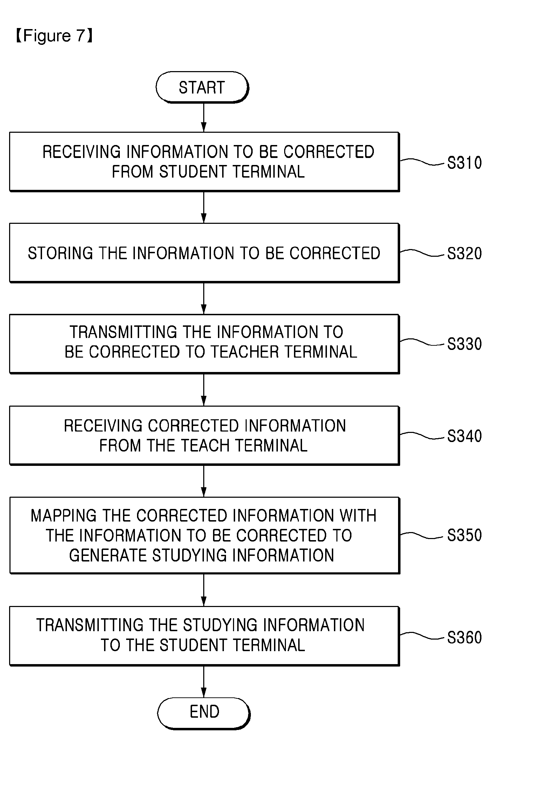

FIG. 7 is a flow chart showing a method for providing correction and teaching services over network according to a present invention.

Hereinafter, a method for providing correction and teaching services over network according to a present invention will be explained referring to FIG. 1 through FIG. 7. According to the method, a student make answer on the scratch paper by using the electric pen 110 included in the student terminal 100-1. When the answer is made on the scratch paper including codes which are formed at each position and represent the position by using the electric pen 110, the electric pen 110 detects the position information of the write-starting point of a student, and the variation of the relative coordinates of writing on the scratch paper to generate image information of writing.

The image information generated by the electric pen 110 is transmitted to the body display section 130 of the student terminal 100-1, the body display section 130 stores the image information in the storing section 132, and the information to be corrected including the image information, the identity (ID) of the student terminal 100-1, the IP address of the student terminal 100-1, the identity (ID) of the teacher terminal 100-2 and the IP address of the teacher terminal 100-2 is transmitted to the web server 200.

Then, the receiving section 210 of the web server 200 receives the information to be corrected from the student terminal 100-1 (S310).

The received information to be corrected is stored in the storing section 250 of the web server 200 (S320), and the transmitting section 270 of the web server 200 transmits the information to be corrected to the teacher terminal 100-2, based on the IP address of the teacher terminal 100-2, which is included in the information to be corrected (S330).

The student terminal 100-1 receives the information to be corrected from the web server 200 through the receiving section 131 of the body display section 130 of the electric diary 100 corresponding to the student terminal 100-1 (S340).

On the other hand, a teacher who receives the information to be corrected, which includes the image information such as the answer sheet of a student whom the teacher cares, prints out the image information corresponding to the answer sheet created on the scratch pater having codes described above by the student through a printer connected to the student terminal 100-1.

The teacher writes correction regarding the answer sheet on the scratch paper on which the image information corresponding to the answer sheet is printed by using the electric pen 110, so that the corrected information is generated and stored by the teacher terminal 100-2.

On the other hand, when the teacher has something to comment in voice, during writing correction by using the electric pen 110, the teach can talk, and then the corrected information includes not only the write-trajectory information regarding the correction in image but also the audio file of the comment.

The corrected information is stored in the storing section 132 of the body display section 130 of the electric diary 100 corresponding to the teacher terminal 100-2, and the corrected information is transmitted to the web server 200 through the transmitting section 137 of the body display section 130 of the electric diary 100.

Then, the receiving section 210 of the web server 200 receives the corrected information from the teacher terminal 100-2 (S340), and the mapping section 230 of the web server 200 maps the corrected information received from the teacher terminal 100-2 with the information to be corrected, which is already stored in the web server 200 to generate and store the studying information corresponding to image information in which correction is added to the answer sheet (S350).

That is, the mapping section 230 of the web server 200 generates the studying information corresponding to the image information in which the image information such as the answer sheet included in the information to be corrected, and the correction image performed by a teacher are overlapped with each other.

The studying information generated by the mapping section 230 of the web server 200 is transmitted to the student terminal 100-1 based on the IP address of the student terminal 100-1 stored in the storing section 250 of the web server 200 (S360). Therefore, the student receives the studying information through his terminal, so that the student can confirm the correction created by the teacher.

Further, when the audio file of the teacher's comment is included in the studying information, the student can be taught more realistically.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for providing correction and teaching services over network and web server, the method comprising:
enabling a web server to receive information to be corrected, which includes image information created by a student from a student terminal;
enabling the web server to store the information to be corrected;
enabling the web server to transmit the information to be corrected to a teacher terminal;
enabling the web server to receive corrected information from the teacher terminal;
mapping the corrected information and the information to be corrected.

2. The method of claim 1, further comprising:
enabling the web server to store studying information generated by the corrected information and the information to be corrected, which are mapped with each other.

3. The method of claim 2, further comprising:
enabling the web server to transmit the studying information to the student terminal.

4. The method of claim 1, wherein the image information is generated by an electric pen, when the student writes down something on a scratch paper with the electric pen,
the scratch paper including codes which are formed at each position and represent the position,
the electric pen reading a write-starting point, and measuring and storing relative coordinate on the scratch paper when the student writes down something on the scratch paper to obtain and store write-trajectory information based on position information of the write-starting point and the relative coordinate.

5. The method of claim 4, wherein the corrected information is generated by an electric pen, when the teacher writes down correction on a scratch paper with the electric pen,
the image information included in the information to be corrected being printed out on the scratch paper,
the scratch paper including codes which are formed at each position represent the position,
the electric pen reading a write-starting point, and measuring and storing relative coordinate on the scratch paper when the teacher writes down something on the scratch paper to obtain and store write-trajectory information based on position information of the write-starting point and the relative coordinate.

6. A web server comprising:
a receiving section configured to receive information to be corrected, which includes image information created by a student from a student terminal;
a storing section configured to store the information to be corrected;
a transmitting section configured to transmit the information to be corrected to a teach terminal; and
a mapping section configured to map corrected information with the information to be corrected when the receiving section receives the corrected information from the teacher terminal.

7. The web server of claim 6, wherein the storing section further stores studying information generated by the corrected information and the information to be corrected mapped with each other.

8. The web server of claim 7, wherein the transmitting section further transmits the studying information to the student terminal.

9. The web server of claim 6, wherein the image information is generated by an electric pen, when the student writes down something on a scratch paper with the electric pen,
the scratch paper including codes which are formed at each position and represent the position,
the electric pen reading a write-starting point, and measuring and storing relative coordinate on the scratch paper when the student writes down something on the scratch paper to obtain and store write-trajectory information based on position information of the write-starting point and the relative coordinate.

10. The web server of claim 9, wherein the corrected information is generated by an electric pen, when the teacher writes down correction on a scratch paper with the electric pen,
the image information included in the information to be corrected being printed out on the scratch paper,
the scratch paper including codes which are formed at each position represent the position,
the electric pen reading a write-starting point, and measuring and storing relative coordinate on the scratch paper when the teacher writes down something on the scratch paper to obtain and store write-trajectory information based on position information of the write-starting point and the relative coordinate.
